# EUROPEAN PATENT APPLICATION

(11) **EP 2 660 480 A1**
(43) Date of publication of application: **06.11.2013**
(21) Application number: 10861424.9
(22) Date of filing: 28.12.2010
(51) Int. Cl.: F15B 13/02, E02F 9/22, F15B 13/043, F16K 11/07

(54) **HOLDING VALVE FOR CONSTRUCTION EQUIPMENT**

(71) Applicant: Volvo Construction Equipment AB, 631 85 Eskilstuna (SE)
(72) Inventor: KANG, Min-Heuk, Changwon-si Gyeongsangnam-do 642-765 (KR); JEON, Man-Seuk, Changwon-si Gyeongsangnam-do 642-777 (KR)
(74) Representative: Zimmermann, Tankred Klaus
(86) International application number: PCT/KR2010/009407
(87) International publication number: WO 2012/091194

(57) **Abstract**

The present invention relates to a holding valve that is used for a hydraulic circuit for controlling a working device actuator of construction equipment, and to a holding valve for construction equipment in which a double nut and a sleeve are removed such that an assembling efficiency is improved and the cost is reduced, and further, the abnormal assembling of a piston can be prevented. According to the present invention, a holding valve for construction equipment comprises: a valve block which includes a space portion, a vertical hole, and a plurality of drain flow paths, wherein the space portion is installed between a working device actuator and a direction control valve and is formed on the upper side, and the vertical hole is formed on the lower part of the space portion; a spool assembly which includes a spool, a spool guide, and a ring member, wherein the spool is coupled with the vertical hole of the valve block to allow a sliding motion therein, the spool guide is inserted into an outer surface of the upper end of the spool, and the ring member is interposed between the outer surface of the upper end of the spool and an inner surface of the spool guide and fixes the spool and the spool guide; an elastic member which is inserted into the outer surface of the spool guide, wherein a lower end of the elastic member is mounted on a surface that is adjacent to the vertical hole of the valve block and an upper end thereof is supported by the spool guide; a piston which is mounted in the space portion of the valve block such that the piston is positioned on the upper part of the spool, forms a pilot pressure chamber, and slides in a lower direction if an external pilot signal pressure is applied; and a holding poppet which is mounted on the direction control valve such that the holding poppet is positioned on the lower part of the spool, and has a back chamber filled with a hydraulic fluid.

## Description

### [Field of the Invention]

The present invention relates to a holding valve for a construction machine. More particularly, the present invention relates to a holding valve, which is used in a hydraulic circuit for controlling an actuator for a work apparatus of a construction machine.

### [Background of the Invention]

In general, a construction machine such as an excavator or a loader can easily perform an excavating and loading work, and the like. Such a construction machine employs a holding valve that is used in an actuator-controlling hydraulic circuit in order to perform a function of a valve for both preventing a naturally descending motion caused by a leakage of a hydraulic fluid in a neutral position of the work apparatus such as an arm and controlling the flow rate of the hydraulic fluid during the drive of the work apparatus

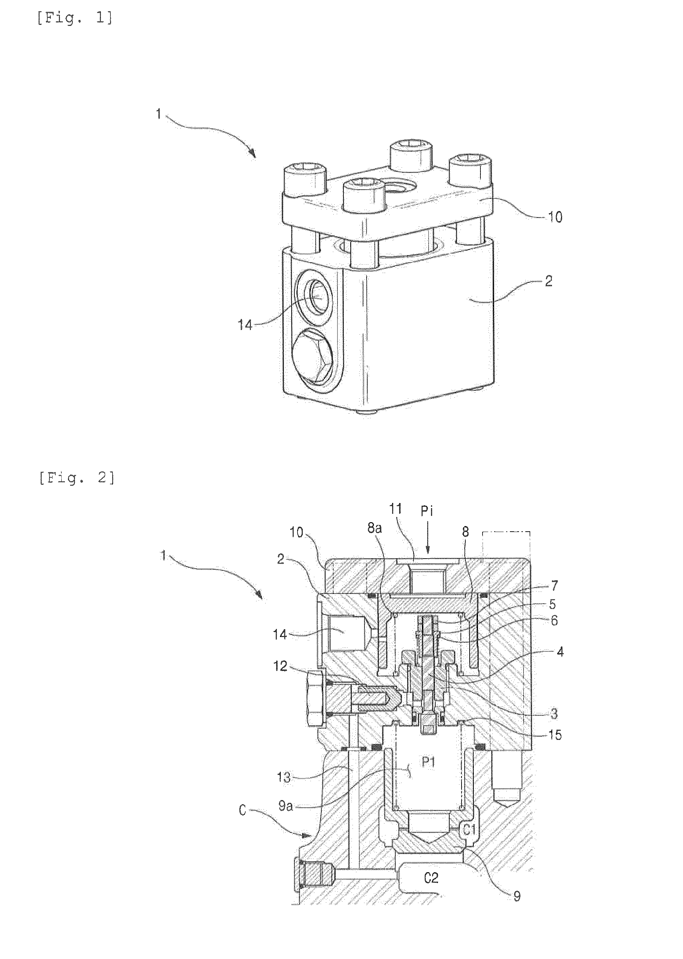

A conventional holding valve is shown in Figs. 1 and 2. The holding valve 1 is mounted between an actuator (not shown) for a work apparatus such as a boom or arm cylinder and a direction control valve C.

The detailed structure of the holding valve 1 will be described hereinafter.

The holding valve 1 includes a valve block 2, a sleeve 3 mounted in the valve block 2, a spool 4 coupled to the inside of the sleeve 3 so as to be slidably moved in the sleeve 3, a spool guide 5 fitted around the outer circumference of an upper end of the spool 4, a spring 6 fitted around the outer circumference of the spool 4 in such a manner as to be located between the spool guide 5 and the sleeve 3 and configured to elastically support the spool 4, a double nut 7 configured to prevent the escape of the spool guide 5 from the spool 4, a piston 8 mounted above the spool and elastically supported by a spring 8a, a holding poppet 9 mounted below the spool and including a back pressure chamber 9a filled with a hydraulic fluid to form a hydraulic pressure P1 therein, and a cover 10 configured to cover the piston 8.

The operation of the holding valve 1 will be described hereinafter.

First, in the case where a holding function is performed, the spool 4 is seated on the sleeve 3 and a force acting due to the internal pressure P1 of the holding poppet 9 is always maintained to be larger than a force acting contrarily to the force acting due to the internal pressure P1 at a part C1 connected to a boom or arm cylinder, so that a leakage of the hydraulic fluid from C1 to C2 is suppressed, thereby preventing a free fall of the boom or arm cylinder.

In the case where the holding function is released, when the piston 8 exerts a force to the spool 4 in response to a pilot signal pressure Pi applied to a pilot signal pressure port 11 from the outside and the spool 4 is slidably moved downwardly on the drawing sheet, the hydraulic fluid filled in the internal back pressure chamber 9a of the holding poppet 9 is drained to a return flow path C2 of the direction control valve C through a check valve 12 via a flow path 13

Eventually, the flow rate of the hydraulic fluid in the holding poppet 9 is decreased to cause the internal pressure P1 of the back pressure chamber 9a to be lowered, so that a force acting due to the pressure P1 is smaller than a force acting contrarily to the force acting due to the pressure 21 at C1. Thus, the holding poppet 9 is moved upwardly on the drawing sheet to cause the hydraulic fluid of C1 to be flown to C2 to operate the boom or arm cylinder in the holding state.

However, the conventional holding valve 1 entails a problem in that the spool 4 is coupled to the outer circumference of the sleeve 5 by means of the double nut 7, thereby degrading assemblability and structural stability.

In addition, the cover 10 of the conventional holding valve 1 is fastened to the valve block 1 by means of bolts (not shown) in a state in which the piston 8 is covered by the cover 10. In this process, since there occurs a phenomenon that the piston 7 is projected outwardly due to an elastic force of the spring 8a, the piston 7 may be assembled abnormally, thereby having an adverse effect on operability of the holding valve.

A non-explained reference numeral 15 denotes a spring for elastically supporting the holding poppet 9 and a non-explained reference numeral 14 denotes a drain flow path for preventing the generation of the back pressure.

### [Detailed Description of the Invention]

### [Technical Problems]

Accordingly, the present invention was made to solve the aforementioned problem occurring in the prior art, and it is an object of the present invention to provide a holding valve for a construction machine, which can eliminate the necessity of the double nut and the sleeve, thereby improving assemblability and reducing the manufacturing cost.

Another object of the present invention is to provide a holding valve for a construction machine, which can prevent abnormal assembly of the piston.

### [Technical Solution]

To accomplish the above object, in accordance with an embodiment of the present invention, there is provided a holding valve for a construction machine including: a valve block mounted between an actuator for a work apparatus and a direction control valve, the valve block including a space portion formed at an upper portion thereof, a vertical hole formed under the space portion, and a plurality of drain flow paths; a spool assembly including a spool slidably coupled to the vertical hole of the valve block, a spool guide fitted around the outer circumference of an upper end of the spool, and a ring member interposed between the outer circumference of the upper end of the spool and the inner circumference of the spool guide so as to securely fix the spool and the spool guide with respect to each other; an elastic member fitted around the outer circumference of the spool guide in such a manner as to be seated at a lower end thereof on a face adjacent to the vertical hole of the valve block and supported at an upper end thereof by the spool guide; a piston mounted in the space portion of the valve block in such a manner as to be located above the spool to allow a pilot pressure chamber to be formed in the space portion, so that the piston is moved slidably downwardly when a pilot signal pressure is applied from the outside; and a holding poppet mounted at the direction control valve in such a manner as to be located below the spool, the holding poppet including a back pressure chamber filled with a hydraulic fluid.

In accordance with a preferable embodiment, the spool may have a groove formed on the outer circumference of the upper end thereof so that the ring member is partially fitted into the groove when viewed from a cross section of the ring member.

In accordance with another preferable embodiment, the holding valve may further include a plug fittingly coupled to the space portion of the valve block and configured to prevent the upward movement of the piston, the plug including a pilot signal pressure port formed at a top thereof. In this case, the plug may be screw-coupled to the space portion 120 of the valve block.

In accordance with still another preferable embodiment, an O-ring may be interposed between the plug and the valve block to hermetically seal the space portion of the valve block.

### [Advantageous Effect]

The holding valve for a construction machine in accordance with an embodiment of the present invention as constructed above has the following advantages.

The vertical hole is formed in the valve block to allow the spool to be slidably coupled to the hole, so that a conventionally used sleeve can be removed, thereby making a structure of the holding valve simple and reducing the manufacturing cost.

In addition, since the spool and the spool guide are securely fixed in position by means of the ring member interposed therebetween, assemblability is relatively further improved as compared to the case where a double nut is applied to the holding valve.

Further, the plug is fittingly coupled to the space portion of the valve block so that an abnormal assembly of the piston can be prevented unlike a conventional holding valve to which a cover is applied.

### [Brief Description of the Invention]

The above objects, other features and advantages of the present invention will become more apparent by describing the preferred embodiments thereof with reference to the accompanying drawings, in which:
Fig. 1 is a schematic perspective view showing a conventional holding valve for a construction machine in accordance with the prior art;
Fig. 2 is a schematic cross-sectional view showing a state in which the holding vale shown in Fig. 1 is mounted on a direction control valve;
Fig. 3 is a schematic cross-sectional view showing a state in which a holding vale for a construction machine in accordance with an embodiment of the present invention is mounted on a direction control valve; and
Fig. 4 is an enlarged view showing a main element of the holding valve for a construction machine shown in Fig. 3.

### [Preferred Embodiments of the Invention]

Now, preferred embodiments of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

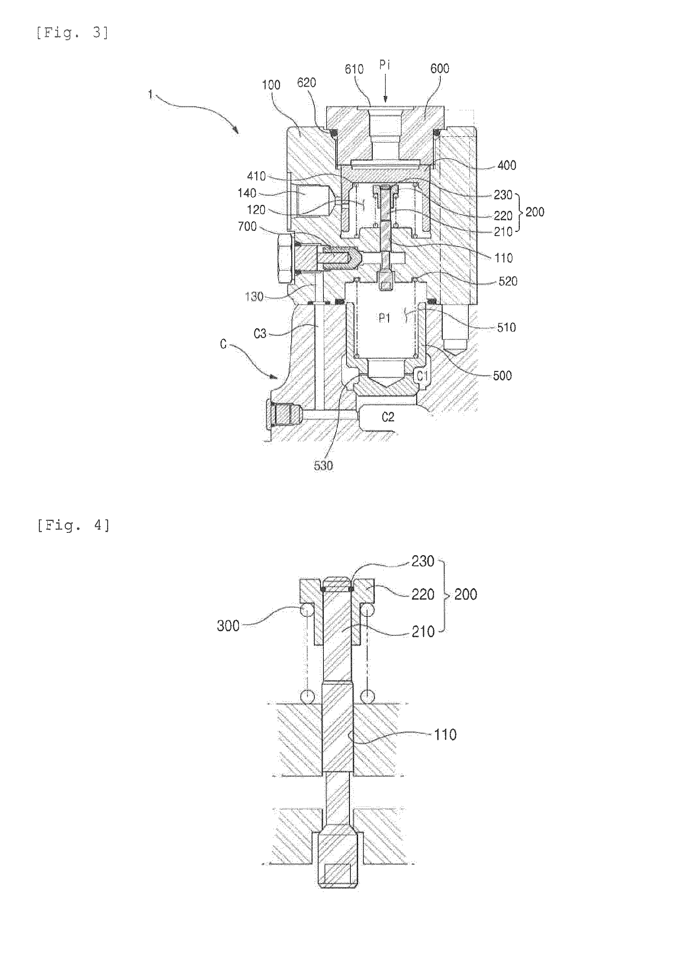

Hereinafter, a holding valve for a construction machine in accordance with an embodiment of the present invention will be described with reference to Figs. 3 and 4.

As shown in Figs. 3 and 4, the holding valve 1 for a construction machine includes a valve block 100, a spool assembly 200, an elastic member 300, a piston 400, and a holding poppet 500. The most distinct aim of the holding valve 1 for a construction machine is to improve assemblability and reduce the manufacturing cost. In addition, the holding valve 1 may include a plug 600.

The valve block 100 is mounted between an actuator for a work apparatus (not shown) such as a boom or arm cylinder and a direction control valve C. The valve block 100 includes a space portion 120 formed at an upper portion thereof so that the spool assembly 200, the elastic member 300, and the piston 400 are accommodated in the space portion 120. In addition, the valve block 100 includes a vertical hole 110 formed under the space portion 120. The vertical hole 110 of the valve block 100 is provided to enable the spool assembly 200 to be slidably moved vertically along the hole 110. Also, the valve block 100 includes a plurality of drain flow paths 130 and 140. A first drain flow path 130 of the valve block 100 is provided to drain a hydraulic fluid when a holding function is released, and a second drain flow path 140 is provided to prevent a back pressure of the piston 400 from being generated.

The spool assembly 200 functions to hold a high load in the valve block 100, and includes a spool 210, a spool guide 220, and a ring member 230 as shown in Figs. 3 and 4.

The spool 210 is slidably coupled to the vertical hole 110 of the valve block 100. In this case, the diameters of the vertical hole 110 of the valve block 100 and the spool 210 are formed to correspond to each other, so that the necessity of a sleeve used to couple a spool to a valve block in a conventional holding vale is eliminated, thereby making a structure of the holding valve simple and reducing the manufacturing cost.

In addition, it is required that a lower end of the spool 210 should be formed extendably to prevent the spool 210 from being passing through the vertical hole 110 of the valve block 100. Further, the lower end of the spool 210 seal the vertical hole 110 of the valve block 100 in a state in which the spool 210 is not downwardly moved by means of the elastic member 300, which will be described later. Resultantly, a back pressure chamber 510 of the holding poppet 500 is closed so that the pressure of a hydraulic fluid contained in the back pressure chamber 510 is held in the back pressure chamber 510.

The spool guide 220 is fixedly fitted around the outer circumference of the upper end of the spool 210. The spool guide 220 includes a protruding part (not designated by a reference numeral) formed protrudingly along the outer circumference of the upper end thereof. The protruding part of the spool guide 220 is provided to support the elastic member 300 that gives an elastic force to the spool assembly 200.

The ring member 230 is interposed between the outer circumference of the upper end of the spool 210 and the inner circumference of the spool guide 220 so as to securely fix the spool guide 220 and the spool 210 with respect to each other. That is, the spool 210 and the spool guide 220 are securely fixed using the ring member 230 to improve assemblability unlike a conventional holding valve in which the spool guide 220 is fixed to the spool 210 using the double nut.

In this case, preferably, the spool 210 has a groove (not designated by a reference numeral) formed on the outer circumference of the upper end thereof so that the ring member 230 can be partially fitted into the groove when viewed from a cross section of the ring member as shown in Fig. 4. For example, when the inner diameter of the outer circumference of the upper end of the spool guide 220 is formed to be larger than the outer diameter of the outer circumference of the upper end of the spool 210 and the groove of the spool 210 is formed such that the ring member 230 is fitted by about the half into the groove when viewed from a cross section of the ring member, the remaining half portion of the ring member 230, which is protruded outwardly from the spool 210 is brought into close contact with the inner circumferential surface of the upper end of the spool guide 220 so that the spool guide 220 and the spool 210 are securely fixed with respect to each other. In this case, the ring member 230 is fixedly fitted into the groove of the spool 210, and thus the spool 210 is prevented from being moved upwardly or downwardly relative to the spool guide 220 so that the spool guide 220 and the spool 210 can be firmly fixed with respect to each other. The reason for this is that the groove of the spool 210 serves as a sort of retaining step.

A C-ring or retainer may be used as the ring member 230.

The elastic member 300 is provided to give an elastic member. The elastic member 300 is fitted around the outer circumference of the spool guide 220. In this case, the elastic member 300 is seated at a lower end thereof on a face adjacent to the vertical hole 110 of the valve block 100 and supported at an upper end thereof by the spool guide 220.

In this case, as described above, the protruding part is preferably formed at the upper end of the spool guide 220 in order to support the elastic member 300 without any escape. Thus, the upper end of the elastic member 300 is supported by the underside of the protruding part of the spool guide 220.

Members made of various elastic materials can be used as the elastic member 300, and a compression spring is the most suitable for the elastic member 300.

The piston 400 is mounted in the space portion 120 of the valve block 100 in such a manner as to be located above the spool 210, and a pilot pressure chamber is formed in the space portion 120 of the valve block 100. The piston 400 is moved slidably downwardly and provides a force for enabling the spool assembly 200 to be slidably moved downwardly when a pilot signal pressure is applied from the outside to release a high load. Meanwhile, a spring 410 is separately mounted on the underside of the piston 400 so as to provide an elastic force.

The holding poppet 500 serves to temporarily limit a high load by which the actuator for a work apparatus descends. The holding poppet 500 is mounted at the direction control valve C in such a manner as to be located below the spool 210, and includes a back pressure chamber 510 filled with a hydraulic fluid.

The plug 600 as a substitute for a conventional cover is provided to prevent abnormal assembly of the piston 400. The plug 600 is fittingly coupled to an upper portion of the space portion 120 of the valve block 100 so as to prevent the upward movement of the piston 400. The plug 600 includes a pilot signal pressure port 610 formed at a top thereof so that a pilot signal pressure is applied to the piston 400 from the outside through the pilot signal pressure port. In this case, the plug 600 is fittingly coupled to the space portion 120 of the valve 100, and may be screw-coupled to the space portion 120 to achieve a more secure coupling between the plug 600 and the valve block 100.

Meanwhile, in the case where the plug 600 is coupled to the space portion 120 of the valve block 100, an O-ring 620 is preferably interposed between the plug 600 and the valve block 100 so as to hermetically seal the space portion 120.

For reference, in Fig. 3, a non-explained reference numeral 520 denotes a spring mounted in the holding poppet 500 to give an elastic force to the holding poppet 500, and a reference numeral 530 denotes an orifice for pressure communication between the back pressure chamber 510 of the holding poppet 500 and the actuator for a work apparatus.

The operation principle of the holding valve for construction machine in accordance with an embodiment of the present invention will be described hereinafter.

The holding valve 1 performs a holding function to prevent a free fall of an actuator of the construction, for example, a boom or arm cylinder. As shown in Fig. 3, a pressure P1 of the back pressure chamber 510 of the holding poppet 500 is identical to a pressure of the actuator C1 for work apparatus through the orifice 530, but a hydraulic pressure area of the back pressure chamber 510 is larger than that of the actuator for a work apparatus, leading to a further increase in pressure. For this reason, the holding poppet 500, i.e., a hydraulic tank-side flow path C2 for a hydraulic fluid returned from the actuator for a work apparatus is held in a closed state by a seat part of the holding poppet 500, so that the work apparatus such as the boom or the arm can maintain a holding state without any free fall.

On the other hand, when a pilot signal pressure Pi is applied to the piston 400 to operate the work apparatus such as the boom or the arm, the piston 400 is moved downwardly or descends, so that the spool 210 is slidably moved downwardly on the vertical hole 110 of the valve block 100 to cause the hydraulic fluid filled in the back pressure chamber 510 of the holding poppet 500 to be supplied to the hydraulic tank-side flow path C2 through the check valve 700 via the first drain flow path 130 and the drain flow path C3 of the direction control valve C.

Accordingly, the holding poppet 500 is moved upwardly or ascends due to a force acting by the pressure C1 of the actuator for a work apparatus, i.e., the outside of the holding poppet 500 along with a drop of the internal pressure P1 of the holding poppet 500. Resultantly, the hydraulic fluid of the boom or arm cylinder flows to C2 from C1 to cause the boom or arm cylinder to be operated.

### [Industrial Applicability]

As described above, the holding valve for a construction machine in accordance with the present invention the spool can be coupled to the hole of the valve block without a separate sleeve, and the spool guide can securely fixed to the spool by means of the ring member, but not the double nut, thereby making a structure of the holding valve simple, improving assemblability, and reducing the manufacturing cost.

## Claims

1. A holding valve for a construction machine comprising:
a valve block mounted between an actuator for a work apparatus and a direction control valve, the valve block including a space portion formed at an upper portion thereof, a vertical hole formed under the space portion, and a plurality of drain flow paths;
a spool assembly including a spool slidably coupled to the vertical hole of the valve block, a spool guide fitted around the outer circumference of an upper end of the spool, and a ring member interposed between the outer circumference of the upper end of the spool and the inner circumference of the spool guide so as to securely fix the spool and the spool guide with respect to each other;
an elastic member fitted around the outer circumference of the spool guide in such a manner as to be seated at a lower end thereof on a face adjacent to the vertical hole of the valve block and supported at an upper end thereof by the spool guide;
a piston mounted in the space portion of the valve block in such a manner as to be located above the spool to allow a pilot pressure chamber to be formed in the space portion, so that the piston is moved slidably downwardly when a pilot signal pressure is applied from the outside; and
a holding poppet mounted at the direction control valve C in such a manner as to be located below the spool, the holding poppet including a back pressure chamber filled with a hydraulic fluid.

2. The holding valve according to claim 1, wherein the spool has a groove formed on the outer circumference of the upper end thereof so that the ring member is partially fitted into the groove when viewed from a cross section of the ring member.

3. The holding valve according to claim 1 or 2, further comprising a plug fittingly coupled to the space portion of the valve block and configured to prevent the upward movement of the piston, the plug including a pilot signal pressure port formed at a top thereof.

4. The holding valve according to claim 3, wherein the plug is screw-coupled to the space portion of the valve block.

5. The holding valve according to claim 3, wherein an O-ring is interposed between the plug and the valve block to hermetically seal the space portion of the valve block.
